# EUROPÄISCHE PATENTSCHRIFT

(11) **EP 3 315 392 B1**
(45) Veröffentlichungstag und Bekanntmachung des Hinweises auf die Patenterteilung: **06.05.2020**
(21) Anmeldenummer: 16195525.7
(22) Anmeldetag: 25.10.2016
(51) Int. Cl.: B62H 3/08, E04H 6/00

(54) **AUFBEWAHRUNGSSYSTEM FÜR ZWEIRÄDER**
STORAGE SYSTEM FOR TWO-WHEEL-VEHICLES
SYSTÈME DE RANGEMENT POUR VÉHICULES À DEUX-ROUES

(43) Veröffentlichungstag der Anmeldung: 02.05.2018
(73) Patentinhaber: Kairos Industrial AG, 8807 Freienbach (CH)
(72) Erfinder: GAMBAROTTA, Riccardo, 8003 Zürich (CH); GAMBAROTTA, Alessandro, 8003 Zürich (CH)
(74) Vertreter: Liebetanz, Michael

(56) Entgegenhaltungen:
- AT-B- 397 405
- DE-A1-102009 028 211
- DE-U1- 9 311 296
- DE-U1- 20 209 448
- DE-U1- 29 514 276
- US-A1- 2009 107 056

## Beschreibung

### TECHNISCHES GEBIET

Die vorliegende Erfindung betrifft ein Aufbewahrungssystem für Fahrzeuge, insbesondere für Zweiräder, Fahrräder oder Motorräder.

### STAND DER TECHNIK

Bei herkömmlichen Aufbewahrungssystemen für Fahrzeuge, insbesondere für Zweiräder, Fahrräder oder Motorräder, werden die Fahrzeuge einzeln oder gemeinsam in einem Aufbewahrungsbereich aufbewahrt.

Die WO 2007/029026 zeigt eine ganzseitig verschlossene Aufbewahrungsbox für ein Motorrad, wobei genügend Platz in der Box zur Verfügung steht, um ein Motorrad und die dazugehörige Ausrüstung, wie Helm und Schutzbekleidung, darin zu verstauen. Die Box verfügt über ein Zugangssystem, welches einer berechtigten Person den Zugang ermöglicht. Sollen mehrere Motorräder verstaut werden, so müssen mehrere solche Boxen nebeneinander angeordnet werden.

Die US 2010/0204823 zeigt ein automatisiertes Fahrrad-Aufbewahrungssystem, bei welchem ein Fahrrad bei einer Be- und Entladestation mit dem Vorderrad an einem dafür vorgesehenen Haken aufgehängt werden kann. Ein Roboterarm überführt das am Haken hängende Fahrrad an ein in einen Aufbewahrungsbereich befindliches Transportsystem, welches gleichzeitig zum Transport und zur Aufbewahrung dient. Ein solches Aufbewahrungssystem lässt lediglich die Aufbewahrung von Fahrrädern ohne Zubehör zu. Die US 5,845,788 zeigt ein Fahrrad-Aufbewahrungssystem, bei welchem mehrere Fahrräder an einer gemeinsamen Stange nebeneinander angeordnet werden können. Die Anordnung erfolgt mittels spezieller Aufhängevorrichtungen, welche am jeweiligen Lenker und Sattel befestigbar sind. Mehrere Stangen sind mit gemeinsamen, in sich geschlossenen Transportketten miteinander verbunden. Bei einem solchen Aufbewahrungssystem ist die Zuführung des Fahrrades aufwändig und die Anordnung der Fahrräder erlaubt es, dass ein Benutzer Zugang zu allen Fahrrädern hat.

Die DE 10 2009 028211 A1 und die DE 295 14 276 U1 zeigen jeweils ein Aufbewahrungssystem für Zweiräder mit den Merkmalen des Oberbegriffs des Anspruchs 1.

### DARSTELLUNG DER ERFINDUNG

Es ist daher eine Aufgabe der Erfindung ein Aufbewahrungssystem für Fahrzeuge, insbesondere für Zweiräder, Fahrräder oder Motorräder zur Verfügung zu stellen, welche die aus dem Stand der Technik bekannten Nachteile vermeidet.

Diese Aufgabe wird durch ein Aufbewahrungssystem mit den Merkmalen des Anspruchs 1 gelöst. Ein Aufbewahrungssystem für Fahrzeuge, insbesondere von Zweirädern, Fahrrädern oder Motorrädern, hat ein im wesentlichen geschlossenes Gehäuse mit einem von aussen nicht zugänglichen Aufbewahrungsbereich mit einer Vielzahl von Behältern und mindestens eine verschliessbare Be- und Entladestation der Fahrzeuge, wobei der Aufbewahrungsbereich mit mindestens einem Gebläse versehen ist, mit dem die Luft in dem Aufbewahrungsbereich austauschbar ist, um die eingestellten Fahrzeuge zu trocknen und/oder die Umgebungstemperatur in einem vorbestimmten Temperaturbande zu halten. Dabei ist jeder Behälter zumindest teilweise aus dem Aufbewahrungssystem ausfahrbar, um die Zweiräder leicht einzustellen und herauszunehmen, und der Boden der Behälter ist jeweils eine Lochplatte, wobei unterhalb der Lochplatte sich ein Hohlraum zur Ableitung von durch das Gebläse hindurchgeblasene Luft befindet.

Vorteilhafterweise hat das Gebläse eine Heizungs- und/oder eine Kühlungs- und/oder eine Trocknungseinheit. Sofern z.B. nur eine Heizung vorgesehen ist, kann das System beispielsweise neben der Trocknerfunktion durch den Luftaustausch sicherstellen, dass die Akkumulatoren von Elektrofahrädern nicht in einer zu kalten Umgebungsluft gelagert werden. Das gilt insbesondere, wenn eine Ladefunktion mit einem vorgesehenen realisiert ist.

Die Behälter weisen vorteilhafterweise im wesentlichen die Form eines Quaders auf und sind mindestens durch einen Boden und durch Seitenwände und Vorder- und/oder Rückwände zumindest teilweise geschlossen. Dabei ist jedem Behälter zusätzlich eine am Rahmen angeordnete verschliessbare Tür zugeordnet, mit welcher eine weitere Seite zumindest teilweise verschliessbar ist. Die Tür kann dann Durchgänge für die besagte Luftzirkulation aufweisen.

Jeder Behälter kann auch zumindest teilweise aus dem Aufbewahrungssystem ausfahrbar sein, um die Zweiräder leicht einzustellen und herauszunehmen.

Der Boden der Behälter kann insbesondere eine Lochplatte sein, wobei unterhalb der Lochplatte sich ein Hohlraum zur Ableitung von durch das Gebläse hindurchgeblasene Luft befindet.

Jeder Behälter kann mindestens einen nach innen ausgerichteten elektrischen Anschluss aufweist, an welchem ein elektrisches Gerät durch einen Benutzer anschliessbar ist. Damit ist insbesondere ein elektrischer Speicher für ein Fahrzeug mit einem Elektroantrieb an dem nach innen ausgerichteten elektrischen Anschluss anschliessbar.

In dem Aufbewahrungsbereich ist vorteilhafterweise mindestens ein Temperatursensor vorgesehen, der mit einer Kontrolleinheit für die Gebläse verbunden ist, wobei die Kontrolleinheit ausgestaltet ist, um bei Unterschreiten eines vorbestimmten Schwellwertes für die Temperatur eine Heizungsfunktion für mindestens ein Gebläse angeschaltet wird, und/oder um bei Überschreiten eines vorbestimmten Schwellwertes für die Temperatur eine Kühlfunktion für mindestens ein Gebläse angeschaltet wird. Dabei kann in mehreren oder in jedem Behälter ein solcher Temperatursensor vorgesehen sein, der mit der Kontrolleinheit für die Gebläse verbunden ist, wobei die Kontrolleinheit ausgestaltet ist, um bei Unterschreiten bzw. Überschreiten des vorbestimmten Schwellwertes für die Temperatur die den Temperatursensoren zugeordneten Gebläse einzuschalten.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische perspektivische Ansicht eines Aufbewahrungssystems gemäss einem Ausführungsbeispiel der Erfindung,
- Fig. 2: eine schematische Draufsicht auf ein Aufbewahrungssystem der Fig. 1,
- Fig. 3: eine schematische perspektivische Ansicht eines Aufbewahrungssystems gemäss einem weiteren Ausführungsbeispiel der Erfindung, ohne obere Abdeckelemente und mit einer Steuerkonsole,
- Fig. 4: einen vergrösserten Ausschnitt aus Fig. 3, und
- Fig. 5: eine schematische perspektivische Ansicht eines Aufbewahrungssystems gemäss einem weiteren Ausführungsbeispiel der Erfindung mit zwei Etagen.

### BESCHREIBUNG BEVORZUGTER AUSFÜHRUNGSFORMEN

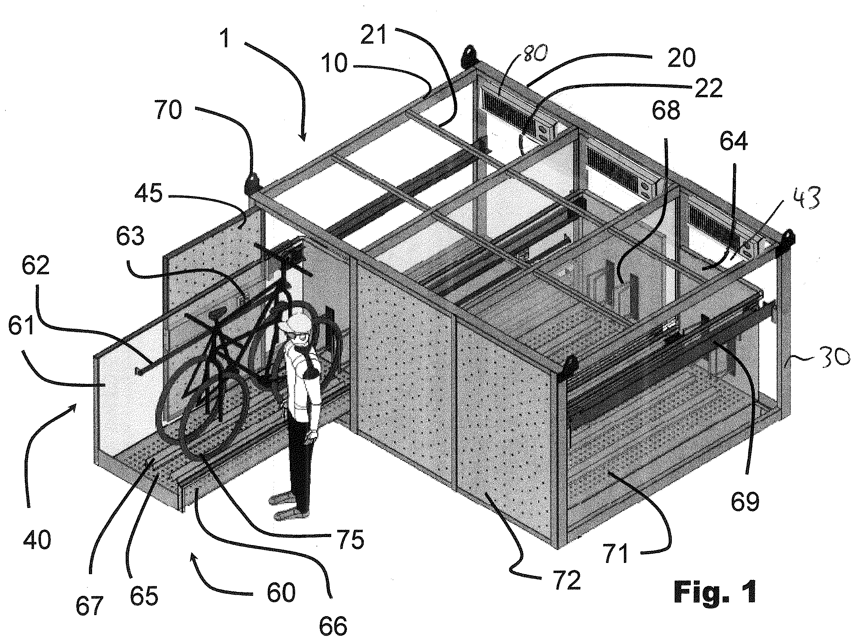

Die Figur 1 zeigt eine perspektivische Ansicht eines erfindungsgemässen Aufbewahrungssystems 1 gemäss einem Ausführungsbeispiel der Erfindung mit einem Gerüst 10 bestehend aus einem Horizontalgerüst 20 und einem Vertikalgerüst 30. Die Zwischenräume der Decke können mit Verbindungsstreben 21 und Behältertrenner 22 aufgeteilt werden. Eine das Aufbewahrungssystem 1 abschliessende Deckenplatte sowie Seiten- und Rückwände sind in der Fig. 1 nicht eingezeichnet worden. Sie finden sich in anderen Figuren. Das Aufbewahrungssystem 1 nach Fig. 1 hat drei Einheiten, die jeweils mit einer vorderen Tür 45 verschlossen sind, welche von aussen zugänglich am Gehäuse angeordnet ist. Die Tür 45 ist am Rahmen 10 befestigt und öffnet sich, um den Behälter 60 herausziehen zu können.

Dabei ist für eine der drei Einheiten ein ausgefahrener Behälter 60 einer Belade- und Entladestation 40 dargestellt. Eine diese Anlage steuernde Kontrolleinheit 55 ist hier nicht dargestellt worden. Um den Behälter 60 ausfahren zu können, muss die Tür 45 der Belade- und Entladestation 40 vorab geöffnet werden. Dies kann mittels eines herkömmlichen Schiebetorantriebes oder manuell über einen Handgriff 46 (in anderen Ausführungsbeispielen) realisiert sein.

Ein solches Ausfahrsystem gewährleistet ein zuverlässiges und stabiles Ein- und Ausfahren des Behälters 60 aus dem Aufbewahrungssystem 1. Dafür weist der abgebildete Behälter 60 einen Boden 65, eine Rückwand 64 und mindestens eine an der Rückwand 64 seitlich anschliessende Seitenwand 61 auf, welche zumindest teilweise geschlossenen sind. Es ist in den verschiedenen Ausführungsbeispielen zu sehen, dass insbesondere an den Seitenwänden zum Teil innere Seitenwände 26 vorgesehen sind, zum Teil Durchbrüche 42, die nebeneinander liegende Behälter 60 strömungstechnisch miteinander verbinden. Dabei kann ein solcher Durchbruch zum Beispiel durch einen (in den Figuren nicht dargestellten) Maschendraht gesichert sein. Das gleiche gilt für die Rückwand 64, die einen hinteren Durchbruch 64 aufweist, der zu einer eventuell dahinter angeordneten zweiten entgegengesetzten Reihe von Behältern 60 führt.

Auf der der Rückwand 64 gegenüberliegenden Seite des Behälters 60 ist die Tür 45 angeordnet, welche eine weitere verschliessbare Seitenwand des Behälters 60 darstellt. Der Behälter weist in dieser Ausführungsform keinen Deckel auf. Die Tür 45 verfügt über eine Vielzahl von Durchbohrungen 72, die eine Luftzirkulation ermöglicht.

In dem Behälter 60 ist der Boden als gelochte Bodenplatte 65 vorgesehen, der auf der der Seitenwand 61 gegenüberliegenden Seite mit einer Seitenschiene 66 abgeschlossen ist. Damit bestehen in der Bodenplatte 65 eine Vielzahl von Bodengitteröffnungen 71 Auf der Bodenplatte 65 sind mindestens eine und hier zwei Aufnahmerillen 67 für Räder von Zweitädern, insbesondere Fahrräder 75 vorgesehen, die auf der Rille 67 vorgeschoben werden können, bis sie in eine entsprechende Aufnahmeklammer 68 eingeklemmt werden.

Das Aufbewahrungssystem der Figur 1 dient dazu, die einzelnen Behälter 60 mit elektrischem Strom zu versorgen, insbesondere also, um eingestellte Elektrofahrräder zu laden. Dabei weist das System über seitliche Stromschienen 69 auf, welche derart in den Gerüsten 10, 20, 30 angeordnet sind, dass an den Behältern 60 angeordnete (und hier nicht dargestellte Stromabnehmer mit den Stromschienen in Kontakt bringbar sind. Die Stromschiene 69 ist derart ausgestaltet, dass der Stromabnehmer eines Behälters 60 aus der entsprechenden Stromschiene aus- bzw. eingefahren werden kann. Durch ein Vorsehen einer Stromschiene alle zwei Behälter 60 ist es möglich, diesen Behältern 60 Stromanschlüsse 63 bereitzustellen, am besten zur Sicherung mit einer Haltestange 62 abgedeckt. Hinter der entsprechenden Seitenwand ist eine äussere Führungsstange 41 vorgesehen, der auf der anderen Seite die Seitenschiene 66 entspricht.

Es ist somit im Innern des Behälters 60 jeweils mindesten ein elektrischer Anschluss 63 vorgesehen. Der Anschluss 63 kann eine Steckdose aufweisen, welche es erlaubt, gängige Stecker anzuschliessen. Alternativ oder zusätzlich kann der Anschluss 63 ein Kabel (nicht dargestellt) aufweisen, welches derart ausgestaltet ist, dass es innerhalb des Behälters 60 führbar ist und ebenfalls das Verbinden mit gängigen Steckern oder elektrischen Speichern oder Elektrofahrzeugen erlaubt. Um die Relativbewegung zwischen Behälterkörper und Rahmengerüst 10 aufzunehmen, ist eine flexible Verbindung, beispielsweise in der Form eines Kabelschlepps, zwischen dem elektrischen Anschluss am Rahmen und dem Anschluss 63 im Behälterinnern vorgesehen.

Die Stromversorgung innerhalb des Aufbewahrungssystems 1 ist ebenfalls noch mit den Einheiten 80 versehen, die im oberen Abschnitts des hinteren Durchbruchs 43 am horizontalen Gerüst 20 vorgesehen sind. Dabei handelt es sich um Gebläseeinheiten, die nach vorne und leicht nach unten gerichtet sind, um einen Luftstrom über eingestellte Fahrzeuge 75 zu blasen. Dabei kann es sich in einem einfachen Ausführungsbeispiel einfach um ein Gebläse handeln, dass Umgebungsluft bewegt, wobei Luft vorne durch die Türgitteröffnungen 72 und unten unter dem Boden nach Durchtritt durch die Bodenöffnungen 71 austreten kann. Damit wird eine Trocknerfunktion erreicht, insbesondere wenn feuchte oder nasse Zweiräder eingestellt werden. An der Seitenwand 61 können (nicht dargestellt) Haken vorgesehen sein, an denen Regenpelerine, Helme, Handschuhe, etc. aufgehängt werden können.

In weiteren Ausführungsbeispielen, bei denen die Aufbewahrungssysteme insbesondere draussen aufgestellt werden, können die Einheiten 80 auch Heizungselemente enthalten, zum einen, um die Luftfeuchtigkeit im Behälterraum 60 abzusenken, aber insbesondere, damit eingestellte Akkumulatoren von Elektrofahrrädern nicht zu kalt gelagert werden, insbesondere wenn sie gleichzeitig aufgeladen werden. Auf der anderen Seite können die Einheiten 80, gerade auch, wenn das Aufbewahrungssystem 1 draussen steht, Kühlelemente enthalten, um ein Überhitzen der aufladenden Akkumulatoren und Batterien von Elektrofahrrädern zu vermeiden.

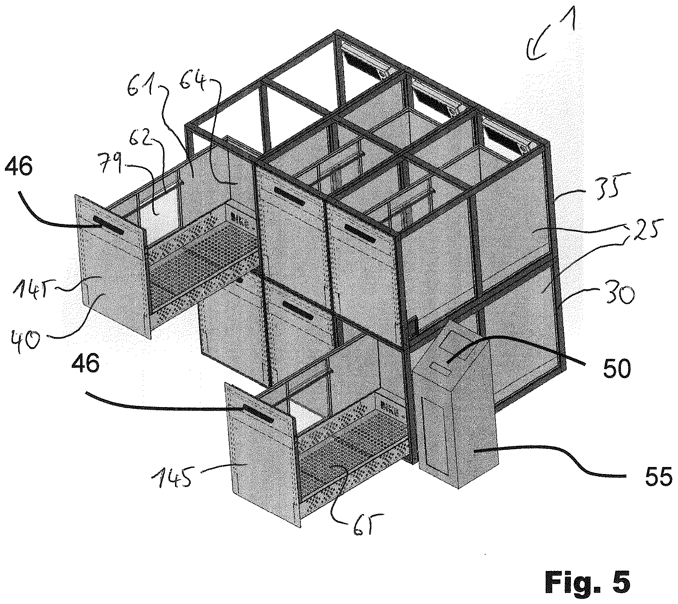

Mit dem Bezugszeichen 70 ist ein Stapelrahmenelement versehen, welches Element vorteilhafterweise eine Öse umfasst, so dass eine Reihe von Be- und Entladestationen 40 en bloc angehoben und versetzt werden können, was einen einfachen Aufbau gestattet. Insbesondere ergibt sich eine Möglichkeit zur Stapelbarkeit wie später im Zusammenhang mit Fig. 5 beschrieben.

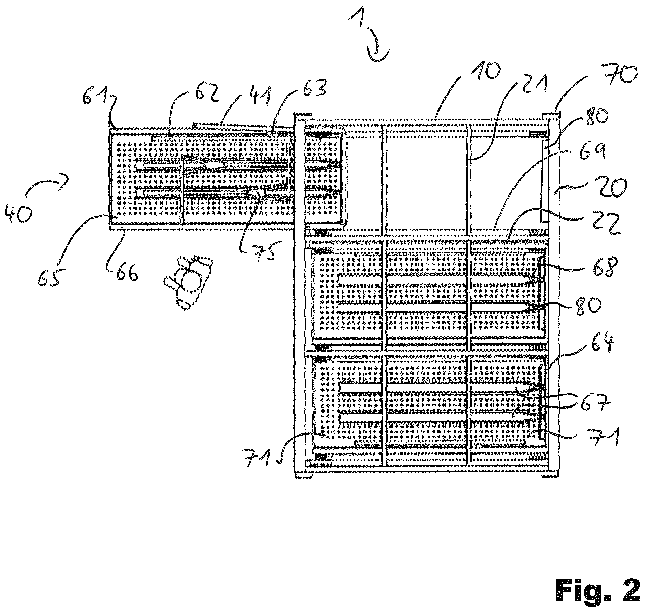

Die Fig. 2 zeigt eine schematische Draufsicht auf ein Aufbewahrungssystem 1 der Fig. 1. Gleiche oder ähnliche Merkmale sind in allen Darstellungen mit gleichen oder ähnlichen Bezugszeichen versehen.

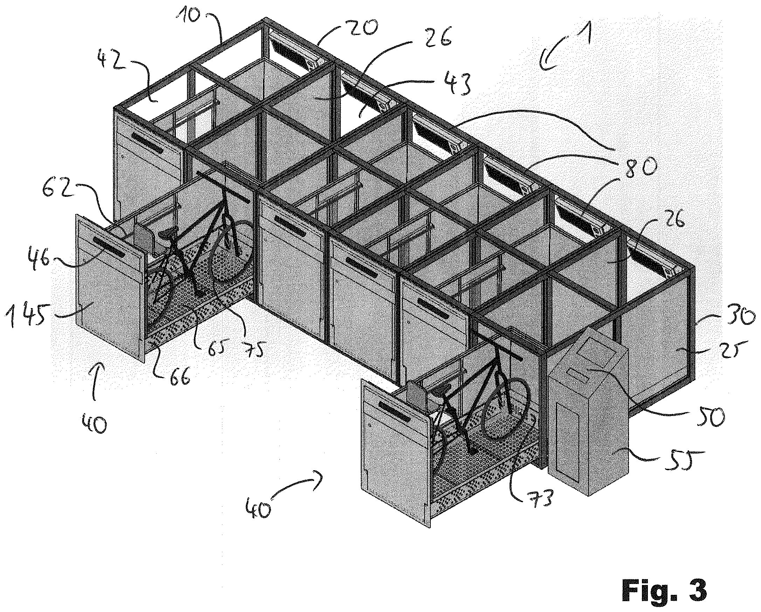

Die Fig. 3 zeigt eine schematische perspektivische Ansicht eines Aufbewahrungssystems 1 gemäss einem weiteren Ausführungsbeispiel der Erfindung, ohne obere Abdeckelemente und mit einer Steuerkonsole 55. Hier sind sechs Be- und Entladestationen 40 nebeneinander angeordnet, wobei zwei Behälter 60 offenstehen. Verschiedene Behälter nebeneinander sind durch durchgehende Seitenwände 26 getrennt, bei anderen bestehen hinten hinter der Rückwand 64 Durchbrüche 43, wobei im oberen Bereich oberhalb der Rückwand 64 jeweils eine Trocknereinheit 80 angebracht ist, die in den Behälterinnenraum ausgerichtet sind. Hier sind die Behälter 60 nur für ein Zweirad vorgesehen. Der Ladeanschluss 63 kann in der unteren Rückkonsole 73 vorgesehen sein. Die Kontrolleinheit 55 kann eine Eingabe- und Anzeigeeinheit 59 umfassen, bei der die zu öffnende Beladestation und Entladestation 40 ausgewählt wird und wobei ggf. ein Zahlungsterminal integriert ist. Die Türen 145 sind als Vorderwand in den Behälter 60 integriert und weisen einen Handgriff 46 zum Herausziehen des Behälters 60 auf.

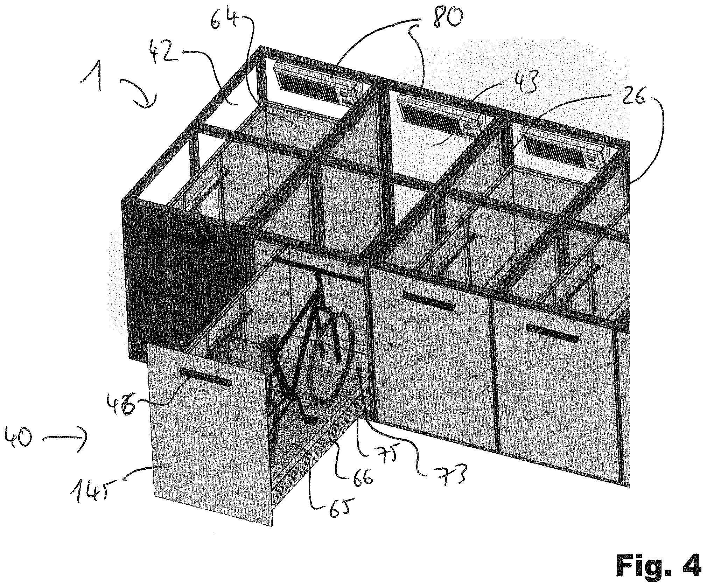

Die Fig. 4 zeigt einen vergrösserten Ausschnitt aus einem zu Fig. 3 ähnlichen Aufbewahrungssystem 1, wobei die einzelnen Behälter 60 seitlich durch die inneren Seitenwände 26 getrennt sind. Da hier auch die Türen 145 als Volltüren ausgestaltet sind, ist die Luft durch unter dem Boden 65 geführte Luftableitungssysteme aus dem Behälter 60 abzuführen. Daher reichen die inneren Seitenwände 26 vorteilhafterweise nicht bis zu einem allfälligen unteren Horizontalgerüst 20 sondern mindestens in des Bodens 65, um einen entsprechende Luftbewegung mit wenig Luftwiderstand erreichen zu können.

Die Fig. 5 zeigt eine schematische perspektivische Ansicht eines Aufbewahrungssystems 1 gemäss einem weiteren Ausführungsbeispiel der Erfindung mit zwei Etagen, also einem unteren Vertikalgerüst 30 und einem oberen Vertikalgerüst 35. Dabei ist zu erkennen, dass in den Behältern 60 in der Seitenwand 61 ein mittlerer Durchbruch 79 vorgesehen ist, der auch durch einen Maschendraht oder eine Acryl-Glasplatte realisiert sein kann. Der Benutzer eines Behälters 60 in der oberen Etage muss sein Zweirad 75 entsprechend anheben oder es ist eine verschiebbare Rampe vorgesehen, um das Zweirad zumindest teilweise in die richtige Höhe zu bringen.

Der modulare Aufbau des Systems gestattet es, dass horizontale und vertikale Transporteinheiten beliebig miteinander kombinierbar sind. Alternativ zu den in der Fig. 5 dargestellten zwei übereinander angeordneten Reihen von je drei Behältern 60, können mehr Behälter nebeneinander und hintereinander angeordnet sein.

Sofern die Gebläse 79 eine Heizungsfunktion (für die kalte Jahreszeit) und/oder eine Kühlfunktion (für den Sommer) umfassen, kann die Kontrolleinheit 55 Temperatursensoren aufweisen, mit denen das Erreichen und Unterschreiten bzw. Überschreiten von vorbestimmten Schwellwerten feststellbar ist, so dass die Heizungsfunktion bzw. die Kühlfunktion zuschaltbar ist. Die Temperatursensoren können auch im Aufbewahrungsbereich an verschiedenen Orten angeordnet sein, insbesondere je Behälter vorgesehen sein, um die Gebläse genauer anzusteuern. Die Kontrolleinheit kann dann auch alternativ eine Notabschaltung umfassen, wenn beim Aufladen der Batterie eines Elektrofahrrads eine unübliche hohe Temperatur in einem Behälter festgestellt wird.

**BEZUGSZEICHENLISTE**

| | | | |
|---|---|---|---|
| 1 | Aufbewahrungssystem | 63 | Stromanschluss |
| 10 | Rahmen/Gerüst | 64 | Rückwand |
| 20 | Horizontalgerüst | 65 | Boden |
| 21 | Verbindungsstreben | 66 | Seitenschiene |
| 22 | Behältertrenner | 67 | Aufnahmerille |
| 25 | äussere Seitenwand | 68 | Aufnahmeklammer |
| 26 | innere Seitenwand | 69 | Führungs- und Anschlussschiene |
| 30 | unteres Vertikalgerüst | 70 | Stapelrahmen mit Öse |
| 35 | oberes Vertikalgerüst | 71 | Bodengitteröffnungen |
| 40 | Be- und Entladestation | 72 | Türgitteröffnungen |
| 41 | Führungsstange | 73 | Rückkonsole |
| 42 | seitlicher Durchbruch | 75 | Fahrrad |
| 43 | hinterer Durchbruch | 79 | Glaswand / Durchbruch |
| 45 | verschwenkende Tür | 80 | Gebläse / Trockner / Heizung / Kühlung |
| 46 | Handgriff | 145 | in die Behälterwand integrierte Tür |
| 50 | Eingabe- und Anzeigeeinheit | | |
| 55 | Kontrolleinheit | | |
| 60 | Behälter | | |
| 61 | Seitenwand | | |
| 62 | Haltestange | | |

## Patentansprüche

1. Aufbewahrungssystem (1) für Fahrzeuge (75), insbesondere von Zweirädern, Fahrrädern, Elektrofahrräder oder Motorrädern, aufweisend:
ein im wesentlichen geschlossenes Gehäuse (10, 20, 30, 25, 45) mit einem von aussen nicht zugänglichen Aufbewahrungsbereich mit einer Vielzahl von Behältern (60) und mindestens einer verschliessbaren Be- und Entladestation (40) der Fahrzeuge;
**dadurch gekennzeichnet, dass** der Aufbewahrungsbereich mit mindestens einem Gebläse (79) versehen ist, mit dem die Luft in dem Aufbewahrungsbereich austauschbar ist, dass der Boden (65) der Behälter jeweils eine Lochplatte ist und wobei sich unterhalb der Lochplatte ein Hohlraum zur Ableitung von durch das Gebläse (79) hindurchgeblasene Luft befindet und dass jeder Behälter (60) zumindest teilweise aus dem Aufbewahrungssystem (1) ausfahrbar ist.

2. Aufbewahrungssystem (1) gemäss Anspruch 1, wobei das Gebläse eine Heizungs- und/oder eine Kühlungs- und/oder eine Trocknungseinheit umfasst.

3. Aufbewahrungssystem (1) gemäss Anspruch 1 oder 2, wobei die Behälter (60) im wesentlichen die Form eines Quaders aufweisen und mindestens durch einen Boden (65) und durch Seitenwände (61) und Vorder- (145) und/oder Rückwände (64) zumindest teilweise geschlossen sind.

4. Aufbewahrungssystem (1) gemäss Anspruch 3, wobei jedem Behälter (60) zusätzlich eine am Rahmen angeordnete verschliessbare Tür (45) zugeordnet ist, mit welcher eine weitere Seite zumindest teilweise verschliessbar ist.

5. Aufbewahrungssystem (1) gemäss einem der vorstehenden Ansprüche, wobei die Tür (45, 145) Durchgänge für eine Luftzirkulation aufweist.

6. Aufbewahrungssystem (1) gemäss einem der vorherigen Ansprüche, wobei jeder Behälter (60) mindestens einen nach innen ausgerichteten elektrischen Anschluss (63) aufweist, an welchem ein elektrisches Gerät durch einen Benutzer anschliessbar ist.

7. Aufbewahrungssystem (1) gemäss Anspruch 6, wobei ein elektrischer Speicher für ein Fahrzeug mit einem Elektroantrieb an dem nach innen ausgerichteten elektrischen Anschluss (63) anschliessbar ist.

8. Aufbewahrungssystem (1) gemäss einem der vorherigen Ansprüche, wobei in dem Aufbewahrungsbereich mindestens ein Temperatursensor vorgesehen ist, der mit einer Kontrolleinheit (55) für die Gebläse (79) verbunden ist, wobei die Kontrolleinheit (55) ausgestaltet ist, um bei Unterschreiten eines vorbestimmten Schwellwertes für die Temperatur eine Heizungsfunktion für mindestens ein Gebläse (79) angeschaltet wird, und/oder um bei Überschreiten eines vorbestimmten Schwellwertes für die Temperatur eine Kühlfunktion für mindestens ein Gebläse (79) angeschaltet wird.

9. Aufbewahrungssystem (1) gemäss Anspruch 8, wobei in mehreren oder in jedem Behälter (60) ein Temperatursensor vorgesehen ist, der mit der Kontrolleinheit (55) für die Gebläse (79) verbunden ist, wobei die Kontrolleinheit (55) ausgestaltet ist, um bei Unterschreiten bzw. Überschreiten des vorbestimmten Schwellwertes für die Temperatur die den Temperatursensoren zugeordneten Gebläse (79) einzuschalten.

## Claims

1. A storage system (1) for vehicles (75), in particular for two-wheel-vehicles, bicycles, electric bicycles or motorcycles, comprising:
a substantially closed housing (10, 20, 30, 25, 45) with a storage area not accessible from the outside with a plurality of containers (60) and at least one lockable loading and unloading station (40) for the vehicles;
**characterised in that** the storage area is provided with at least one blower (79) with which the air in the storage area is exchangeable, that the bottom (65) of the containers is a perforated plate in each case and wherein a cavity is located below the perforated plate for discharging air blown through it by the blower (79) and that each container (60) is at least partially extendable from the storage system (1).

2. The storage system (1) according to claim 1, wherein the blower comprises a heating and/or a cooling and/or a drying unit.

3. The storage system (1) according to claim 1 or 2, wherein the container (60) are substantially in the shape of a cuboid and are at least partially closed by a bottom (65) and by side walls (61) and front (145) and/or rear (64) walls.

4. The storage system (1) according to claim 3, wherein each container (60) is additionally assigned a lockable door (45) arranged on the frame, with which a further side is at least partially lockable.

5. The storage system (1) according to one of the preceding claims, wherein the door (45, 145) has passages for air circulation.

6. The storage system (1) according to one of the preceding claims, wherein each container (60) has at least one inwardly directed electrical connection (63) to which an electrical device can be connected by a user.

7. The storage system (1) according to claim 6, wherein an electric storage device for a vehicle with an electric drive can be connected to the inwardly directed electrical connection (63).

8. The storage system (1) according to one of the preceding claims, wherein in the storage area at least one temperature sensor is provided which is connected to a control unit (55) for the blowers (79), wherein the control unit (55) is configured to switch on a heating function for at least one blower (79) when the temperature falls below a predetermined threshold value and/or to switch on a cooling function for at least one blower (79) when the temperature exceeds a predetermined threshold value.

9. The storage system (1) according to claim 8, wherein in several or in each container (60) a temperature sensor is provided which is connected to the control unit (55) for the blowers (79), wherein the control unit (55) is configured to switch on the blowers (79) associated with the temperature sensors when the temperature falls below or exceeds the predetermined threshold value.

## Revendications

1. Système de rangement (1) pour des véhicules (75), notamment des véhicules à deux roues, des bicyclettes, des bicyclettes électriques ou des motocyclettes
un logement essentiellement fermé (10, 20, 30, 25, 45) avec une zone de stockage non accessible de l'extérieur avec une pluralité de conteneurs (60) et au moins une station de chargement et de déchargement (40) verrouillable pour les véhicules ;
**caractérisé en ce que** la zone de stockage est pourvue d'au moins un souffleur (79) avec lequel l'air dans la zone de stockage peut être échangé, **en ce que** le fond (65) des conteneurs est une plaque perforée dans chaque cas et dans lequel une cavité est située sous la plaque perforée pour l'évacuation de l'air soufflé par le souffleur (79) et **en ce que** chaque conteneur (60) peut être au moins partiellement sorti du système de rangement (1).

2. Système de rangement (1) selon la revendication 1, dans lequel le souffleur comprend une unité de chauffage et/ou de refroidissement et/ou de séchage.

3. Système de rangement (1) selon la revendication 1 ou 2, dans lequel les conteneurs (60) ont sensiblement la forme d'un parallélépipède et sont au moins partiellement fermés par un fond (65) et par des parois latérales (61) et des parois avant (145) et/ou arrière (64).

4. Système de rangement (1) selon la revendication 3, dans lequel à chaque conteneur (60) est associée en plus une porte (45) verrouillable et disposée sur le cadre, avec laquelle un autre côté peut être verrouillé au moins partiellement.

5. Système de rangement (1) selon l'une des revendications précédentes, dans lequel la porte (45, 145) comporte des passages pour la circulation de l'air.

6. Système de rangement (1) selon l'une des revendications précédentes, dans lequel chaque conteneur (60) possède au moins une connexion électrique (63) orientée vers l'intérieur à laquelle un dispositif électrique peut être connecté par un utilisateur.

7. Système de rangement (1) selon la revendication 6, dans lequel un accumulateur électrique pour un véhicule à propulsion électrique peut être connecté à la connexion électrique (63) orientée vers l'intérieur.

8. Système de rangement (1) selon l'une des revendications précédentes, dans lequel il est prévu dans la zone de stockage au moins un capteur de température qui est relié à une unité de commande (55) pour les souffleurs (79), dans lequel l'unité de commande (55) est adapté pour mettre en marche une fonction de chauffage pour au moins un souffleur (79) lorsque la température tombe en dessous d'une valeur seuil prédéterminée et/ou pour mettre en marche une fonction de refroidissement pour au moins un souffleur (79) lorsque la température dépasse une valeur seuil prédéterminée.

9. Système de rangement (1) selon la revendication 8, dans lequel il est prévu dans plusieurs ou dans chaque récipient (60) un capteur de température qui est relié à l'unité de commande (55) pour les souffleurs (79), l'unité de commande (55) étant adapté pour mettre en marche les souffleurs (79) associés aux capteurs de température lorsque la température passe en dessous ou au-dessus de la valeur seuil prédéterminée.
